# FASCICULE DE BREVET EUROPEEN

(11) **EP 3 873 779 B1**
(45) Date de publication et mention de la délivrance du brevet: **26.04.2023**
(21) Numéro de dépôt: 19801230.4
(22) Date de dépôt: 25.10.2019
(51) Int. Cl.: B60Q 1/30, F21S 43/50, F21S 43/37, F21S 45/10, F21W 103/35

(54) **DISPOSITIF LUMINEUX D'UN VEHICULE AUTOMOBILE**
BELEUCHTUNGSVORRICHTUNG FÜR EIN KRAFTFAHRZEUG
LIGHTING DEVICE FOR A MOTOR VEHICLE

(30) Priorité: 31.10.2018 FR 1860103
(43) Date de publication de la demande: 08.09.2021
(73) Titulaire: Valeo Vision Belgique, 7822 Meslin l'Evêque (BE)
(72) Inventeur: FRANC, Alexandre, 7822 MESLIN L'EVEQUE (BE); CREUS, Geoffrey, 7822 Meslin l'Eveque (BE); GELOEN, Richard, 7822 MESLIN L'EVEQUE (BE)
(74) Mandataire: Valeo Visibility
(86) Numéro de dépôt international: PCT/EP2019/079255
(87) Numéro de publication internationale: WO 2020/089106

(56) Documents cités:
- FR-A1- 2 943 030
- FR-A1- 3 071 038
- KR-A- 20120 046 546
- US-A- 4 893 220
- US-A- 4 972 303

## Description

### DOMAINE TECHNIQUE DE L'INVENTION

La présente invention concerne un dispositif lumineux d'un véhicule automobile.

Elle trouve une application particulière mais non limitative dans les feux de stop surélevé d'un véhicule automobile.

### ARRIÈRE-PLAN TECHNOLOGIQUE DE L'INVENTION

Un feu de stop surélevé connu de l'homme du métier est disposé à l'intérieur du véhicule automobile sous le toit pour être accosté sur la vitre arrière du véhicule automobile. Le feu de stop surélevé comprend un boîtier. Un boîtier extérieur vient recouvrir le boîtier du feu de stop surélevé. Un morceau de mousse antibruit est disposé sur une face extérieure du boîtier pour être en contact avec le boîtier extérieur. Le morceau de mousse antibruit permet d'absorber les bruits générés par des frottements entre le boîtier et le boîtier extérieur lorsque le véhicule automobile est en mouvement. Le morceau de mousse est découpé puis collé au boîtier de feu de stop surélevé de façon manuelle.

Un inconvénient de cet état de la technique antérieur est que la fixation manque de précision. US 4 972 303 A montre un dispositif lumineux de véhicule automobile comprenant un boîtier et utilisant un matériau antibruit traversant un trou du boîtier.

Dans ce contexte, la présente invention vise à proposer un dispositif lumineux pour véhicule automobile qui permet de résoudre l'inconvénient mentionné.

### DESCRIPTION GÉNÉRALE DE L'INVENTION

A cette fin, l'invention propose un dispositif lumineux d'un véhicule automobile selon la revendication 1.

Ainsi le matériau antibruit qui s'étend en saillie dudit au moins un trou vers l'extérieur du boîtier va être en contact avec un boîtier extérieur du véhicule automobile ce qui permet d'absorber les chocs dus aux frottements entre le boîtier et le boîtier extérieur. Grâce audit au moins un trou, le matériau antibruit s'étend en saillie toujours au même endroit. Son positionnement en saillie est ainsi toujours précis.

Selon des modes de réalisation non limitatifs, ledit dispositif lumineux peut comporter en outre une ou plusieurs caractéristiques supplémentaires prises seules ou selon toutes les combinaisons techniquement possibles, parmi les suivantes :
Selon un mode de réalisation non limitatif, ledit boîtier comprend au moins un trou et ledit matériau antibruit est configuré pour traverser ledit au moins un trou et s'étendre en saillie dudit trou vers l'extérieur dudit boîtier de sorte à former au moins un point de contact avec un boîtier extérieur dudit véhicule automobile.

Selon un mode de réalisation non limitatif, ledit dispositif lumineux est un feu de stop surélevé.

Selon un mode de réalisation non limitatif, ledit boîtier comprend une pluralité de trous.

Selon un mode de réalisation non limitatif, ledit matériau antibruit comprend une dureté comprise entre 40 et 90 ShoreA.

Selon un mode de réalisation non limitatif, ledit dispositif lumineux comprend en outre un système optique et ledit matériau antibruit est en contact avec ledit système optique.

Selon l'invention, ledit matériau antibruit est en contact avec une vitre arrière dudit véhicule automobile.

Selon l'invention, ledit boîtier et ledit matériau antibruit sont composés de deux matières différentes.

Selon un mode de réalisation non limitatif, ledit boîtier et ledit matériau antibruit sont réalisés par bi-injection.

Selon un mode de réalisation non limitatif, ledit matériau antibruit est un élastomère.

Selon un mode de réalisation non limitatif, le matériau antibruit comprend une lèvre en contact avec la vitre arrière dudit véhicule automobile.

Selon un mode de réalisation non limitatif, le boîtier comprend une marche d'accostage entre le boîtier et un boîtier extérieur.

### BREVE DESCRIPTION DES FIGURES

L'invention et ses différentes applications seront mieux comprises à la lecture de la description qui suit et à l'examen des figures qui l'accompagnent :
- la figure 1 représente une vue arrière d'un véhicule automobile équipé d'un dispositif lumineux selon un mode de réalisation non limitatif de l'invention ;
- la figure 2 représente une vue en perspective du dispositif lumineux de la figure 1, ledit dispositif lumineux comprenant un boîtier et un matériau antibruit, selon une première variante de réalisation d'un mode de réalisation non limitatif de l'invention ;
- la figure 3 représente une vue en coupe longitudinale du dispositif lumineux de la figure 2 ;
- la figure 4a représente une première vue en coupe transversale du dispositif lumineux de la figure 2 ;
- la figure 4b représente une deuxième vue en coupe transversale du dispositif lumineux de la figure 2 ;
- la figure 5 représente une vue de dessous du boîtier de la figure 2, selon un mode de réalisation non limitatif ;
- la figure 6 représente une vue de dessous du boîtier de la figure 2 avec le matériau antibruit, selon un mode de réalisation non limitatif ;
- la figure 7 représente une vue en perspective du dispositif lumineux de la figure 1, ledit dispositif lumineux comprenant un boîtier et un matériau antibruit, selon une deuxième variante de réalisation d'un mode de réalisation non limitatif de l'invention ; et
- la figure 8 représente une vue de dessous du boîtier de la figure 7 avec le matériau antibruit, selon un mode de réalisation non limitatif.

### DESCRIPTIF DE MODES DE REALISATION DE L'INVENTION

Les éléments identiques, par structure ou par fonction, apparaissent sur les différentes figures conservent, sauf précision contraire, les mêmes références.

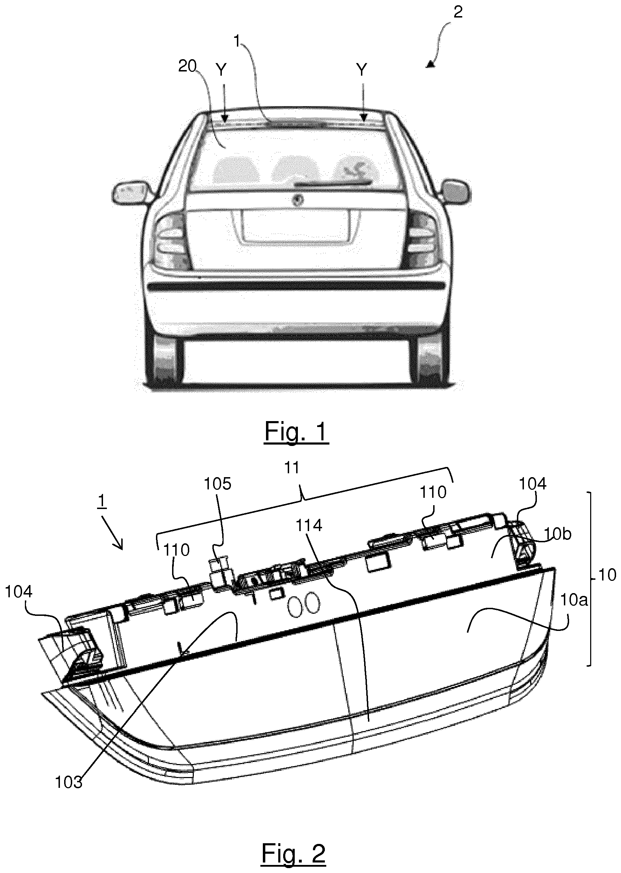

Le dispositif lumineux 1 pour véhicule automobile 2 selon l'invention est décrit en référence aux figures 1 à 8.

Par véhicule automobile, on entend tout type de véhicule motorisé.

Tel qu'illustré sur la figure 1, le véhicule automobile 2 comprend une vitre arrière 20.

Le dispositif lumineux 1 est un feu de stop surélevé, autrement appelé troisième feu de stop, et connu sous l'acronyme anglo-saxon HMSL « High Mount Stop Light ».

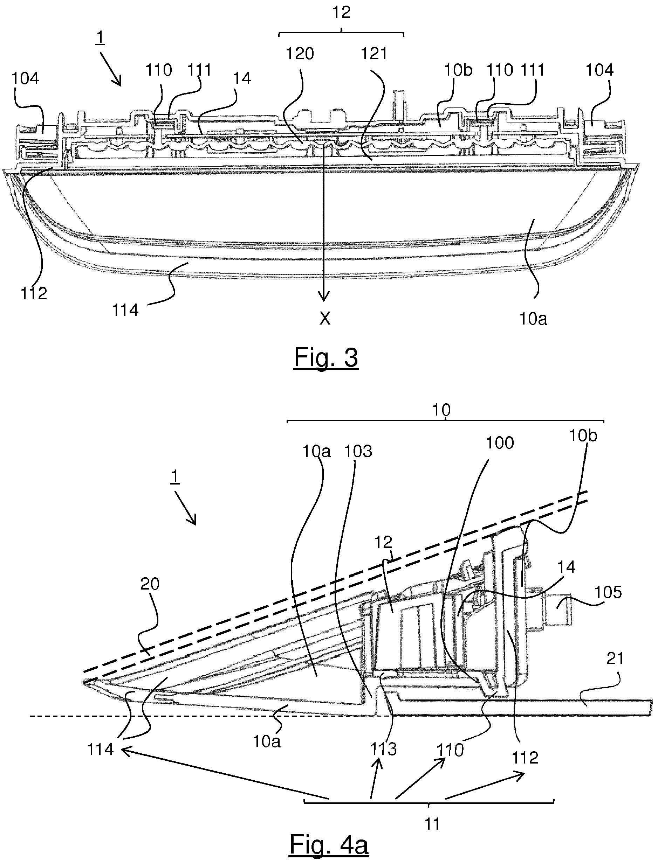

Tel qu'illustré sur la figure 1, dans un mode de réalisation non limitatif, le dispositif lumineux 1 s'étend suivant une direction principale Y qui correspond à l'horizontale lorsqu'il est en position de montage sur le véhicule automobile 2. Le dispositif lumineux 1 éclaire selon une direction longitudinale au véhicule automobile 2 orientée vers l'arrière et selon un axe d'émission optique X (illustré sur la figure 3) proche de l'horizontal, de sorte qu'un observateur se trouvant dans l'axe d'émission optique X et à proximité de cet axe d'émission optique X puisse voir le faisceau lumineux émis par le dispositif lumineux 1.

Tel qu'illustré sur les figures 3, 4a, 4b, 6 et 8, le dispositif lumineux 1 comprend :
- un boîtier 10 ;
- un matériau antibruit 11.

Le dispositif lumineux 1 est maintenu dans le véhicule automobile 2 au moyen de son boîtier 10.

Le dispositif lumineux 1 est disposé à l'intérieur du véhicule automobile 2, plus particulièrement sous le toit du véhicule automobile et derrière la vitre arrière 20, et est recouvert en partie par un boîtier extérieur 21, autrement appelé boîtier client 21.

Le boîtier client 21 est illustré sur la figure 4a. Il cache notamment les moyens de fixation entre le boîtier 10 et le toit ou la vitre arrière 20. Le boîtier client 21 est une finition du pavillon de toit à l'intérieur du véhicule automobile 2.

Dans un mode de réalisation non limitatif, le boîtier 10 est un boîtier ouvert. Il est configuré pour s'appuyer en partie contre la vitre arrière 20 (illustrée en ligne discontinue sur la figure 4a) du véhicule automobile 2.

Tel qu'illustré sur la figure 3, dans un mode de réalisation non limitatif, le dispositif lumineux 1 comprend en outre :
- un système optique 12 disposé dans le boîtier 10 ;

Tel qu'illustré sur la figure 3, dans un mode de réalisation non limitatif, le dispositif lumineux 1 comprend en outre un support électronique 14 avec au moins une source de lumière (non illustrée).

Les éléments du dispositif lumineux 1 sont décrits ci-après.

### • Support électronique 14

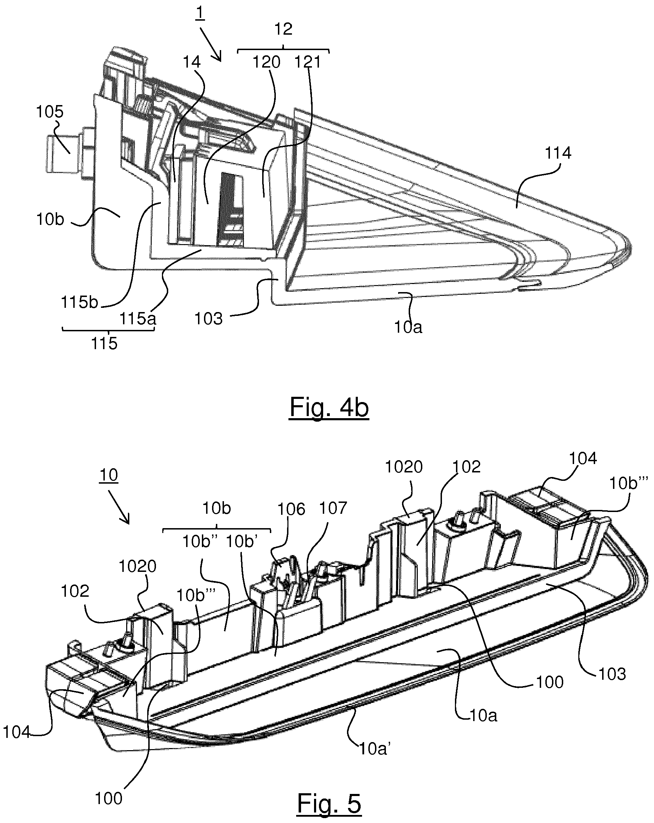

Le support électronique 14 est illustré sur les figures 3, 4a et 4b.

Dans un mode de réalisation non limitatif, le support électronique 14 est une carte à circuit imprimé, connue sous l'acronyme anglo-saxon PCBA « Printed Circuit Board Assembly ». Le support électronique 14 est disposé dans le boîtier 10 en regard du système optique 12. Il s'étend selon la direction principale Y.

Une ou plusieurs sources de lumière sont disposées sur ledit support électronique 14.

Dans un mode de réalisation non limitatif, une source de lumière est une source de lumière à semi-conducteur.

Dans un mode de réalisation non limitatif, la source de lumière à semi-conducteur fait partie d'une diode électroluminescente.

Par diode électroluminescente, on entend tout type de diodes électroluminescentes, que ce soit dans des exemples non limitatifs des LED (« Light Emitting Diode »), des OLED (« organic LED »), des AMOLED (Active-Matrix-Organic LED), ou encore des FOLED (Flexible OLED).

Une source de lumière est configurée pour émettre des rayons lumineux qui coopèrent avec le système optique 12 pour générer un faisceau lumineux. Ledit faisceau lumineux permet de réaliser la fonction lumineuse de feu de stop surélevé.

Dans un mode de réalisation non limitatif, le support électronique 14 comprend une pluralité de sources de lumière. Ce mode de réalisation non limitatif est pris comme exemple dans la suite de la description.

### • Système optique 12

Le système optique est illustré sur les figures 3, 4a et 4b.

Le système optique 12 permet de générer un faisceau lumineux (non illustré) à partir des rayons lumineux émis par les sources de lumière. Le faisceau lumineux est dirigé vers l'extérieur du boîtier 10 en direction de la vitre arrière 20 du véhicule automobile 2.

Dans un mode de réalisation non limitatif, le système optique 12 comprend :
- un élément optique primaire 120 ;
- un élément optique secondaire 121 ;

L'élément optique primaire 120 et l'élément optique secondaire 121 sont formés d'un matériau transparent ou translucide, similaire à une lentille. L'élément optique primaire 120 et l'élément optique secondaire 121 sont sensiblement plan et s'étendent selon la direction principale Y du dispositif lumineux 1.

L'élément optique primaire 120 est disposé en partie en regard des sources de lumière. Il est configuré pour collimater les rayons lumineux des sources de lumière vers l'élément optique secondaire 121. A cet effet, l'élément optique primaire 120 comprend des échelons de Fresnel.

L'élément optique secondaire 121 est disposé en regard de l'élément optique primaire 120 de sorte à recevoir les rayons lumineux R collimatés par l'élément optique primaire 140 et les envoyer en direction de la vitre arrière 20 du véhicule automobile 2.

### • Boîtier 10 et matériau antibruit 11

### o Boîtier 10

Le boîtier 10 est illustré sur les figures 2 à 8.

Le boîtier 10 est un boîtier ouvert qui est configuré pour venir s'appuyer contre la vitre arrière 20 du véhicule automobile 2.

Dans un mode de réalisation non limitatif, le boîtier 10 est fixé à la carrosserie et/ou la vitre arrière 20 du véhicule automobile 2 via des pattes de fixation 104 qui coopèrent avec des moyens de fixation sur le véhicule automobile. Il est fixé sous le toit du véhicule automobile 2.

Tel qu'illustré sur la figure 5, le boîtier 10 comprend une partie primaire 10a visible de l'intérieur du véhicule automobile, et une partie secondaire 10b non visible qui est configurée pour être recouverte par le boîtier client 21.

Tel qu'illustré sur la figure 4a par exemple, la partie primaire 10a et la partie secondaire 10b sont séparées par une marche d'accostage 103. Cette marche d'accostage 103 permet d'aligner le boîtier client 21 avec le boîtier 10 (selon la ligne en pointillés).

Tel qu'illustré sur la figure 5, la partie primaire 10a comprend une périphérie extérieure 10a'.

Tel qu'illustré sur la figure 5, la partie secondaire 10b comprend deux sous-parties 10b' et 10b" relativement perpendiculaires l'une par rapport à l'autre dont une première sous-partie 10b' qui s'étend parallèlement à ladite partie primaire 10a.

La deuxième sous-partie 10b" comprend :
- deux extrémités 10b'" situées de part et d'autre de la première sous-partie 10b' de forme relativement à un angle droit ;
- au moins un muret d'alimentation 102 pour une injection d'une extrémité 1020. Dans l'exemple non limitatif illustré, elle comprend deux murets d'alimentation 102.

Le boîtier 10 comprend au moins un trou 100 configuré pour laisser passer le matériau antibruit 11. Dans un mode de réalisation non limitatif illustré, ledit au moins un trou 100 a la forme d'un quadrilatère. Dans des variantes de réalisation non limitatives, il est de forme rectangulaire ou carré.

Dans un premier exemple de réalisation non limitatif illustré sur la figure 5, les dimensions du trou 100 sont 15,23*5,21mm.

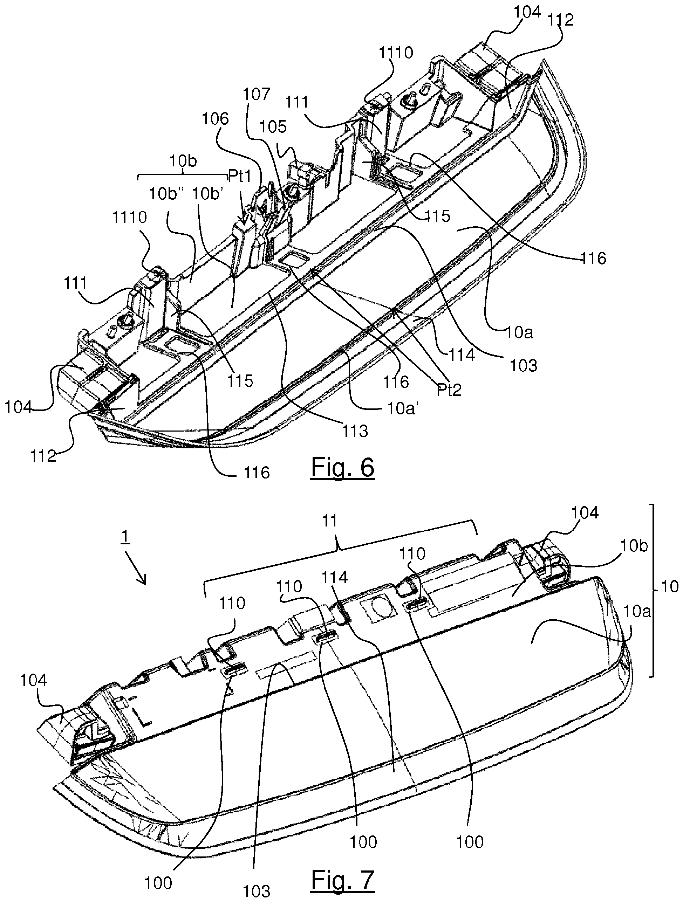

Dans un deuxième exemple de réalisation non limitatif de la figure 7, les dimensions du trou 100 sont 14*5mm.

Ledit au moins un trou 100 est réalisé dans la partie secondaire 10b. Il est formé en particulier dans la première sous-partie 10b' de la partie secondaire 10b.

Dans un mode de réalisation non limitatif, le boîtier 10 comprend plusieurs trous 100. Dans l'exemple non limitatif de la figure 5, il comprend 2 trous. Dans l'exemple exemple non limitatif de la figure 7, il comprend 3 trous. Trois trous permettent un meilleur contact avec le boîtier client 21, et apporte une meilleure stabilité.

Dans un mode de réalisation non limitatif illustré sur la figure 2 par exemple, le boîtier 10 comprend en outre un connecteur 105 configuré pour se connecter à un connecteur client (non illustré) pour l'alimentation électrique du dispositif lumineux 1.

Dans un mode de réalisation non limitatif illustré sur les figures 5 et 6, le boîtier 10 comprend en outre un clip de fixation 106 du système optique 12.

Dans un mode de réalisation non limitatif illustré sur les figures 5 et 6, le boîtier 10 comprend en outre une patte de positionnement 107 du système optique 12.

### o Matériau antibruit 11

Tel qu'illustré sur les vues en coupe des figures 4a et 4b, le matériau antibruit 11 est disposé en partie à l'intérieur dudit boîtier 10 et est en contact avec ledit boîtier 10.

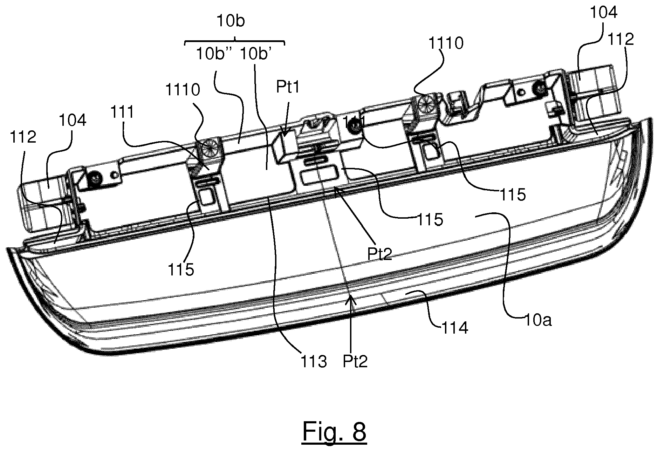

Selon l'invention, le boîtier 10 et le matériau antibruit 11 sont composés de deux matières différentes. Dans un mode de réalisation non limitatif, ils sont réalisés par bi-injection. Dans un mode de réalisation non limitatif illustré sur les figures 6 et 8, il y a un point d'injection Pt1 pour le boîtier 10 (au niveau de la deuxième sous-partie 10b") et deux points d'injection Pt2 pour le matériau antibruit 11 (au niveau de la périphérique extérieure 10a' et de la marche d'accostage 103).

La bi-injection permet de réduire les coûts et le temps d'assemblage puisque le boîtier 10 et le matériau antibruit 11 sortent d'un seul moule et ne forment qu'une seule pièce. Grâce à la bi-injection, on supprime ainsi une étape d'assemblage relative au matériau antibruit.

Dans un mode de réalisation non limitatif, le boîtier 10 est réalisé dans un matériau rigide. Il permet d'assurer le maintien du système optique 12 et du support électronique 14 dans le boîtier 10, et d'avoir une tenue en vibrations lorsque le véhicule automobile est en mouvement.

Dans un mode de réalisation non limitatif, la matière du boîtier 10 est du PC (Polycarbonate), de l'ABS (Acrylonitrile Butatiène Styrène), ou de l'ABS-PC. On notera que le boîtier client 21 est en matériau rigide également.

Dans un mode de réalisation non limitatif, le matériau antibruit 11 est un matériau souple. Il permet d'absorber les chocs dus aux frottements du boîtier 10 contre le boîtier client 21, contre le système optique 12 et contre la vitre arrière 20. Ainsi, il supprime les bruits dus à ces différents frottements. Dans un mode de réalisation non limitatif, le matériau antibruit 11 comprend une dureté comprise entre 40 et 90 ShoreA.

Dans un mode de réalisation non limitatif, la matière du matériau antibruit 11 est un élastomère, en particulier un élastomère thermoplastique Dans une variante de réalisation non limitative, la matière est du TPV (TPE oléfinique vulcanisé). Dans une autre variante de réalisation non limitative, la matière est du TPU (TPE de polyuréthane).

Tel qu'illustré sur la figure 4a, le matériau antibruit 11 traverse ledit au moins un trou 100 et s'étend en saillie dudit au moins un trou 100 vers l'extérieur dudit boîtier 10. Il comprend ainsi une partie en saillie 110 configurée pour entrer en contact avec le boîtier client 21. Cela évite au boîtier 10 d'être en contact direct avec le boîtier client 21. On absorbe ainsi les chocs dus aux frottements entre le boîtier 10 et le boîtier client 21. Les bruits dus à ces frottements sont ainsi supprimés. Dans l'exemple non limitatif de la figure 2, il y a deux parties en saillie 110. Dans l'exemple non limitatif de la figure 7, il y a trois parties en saillie 110.

Dans un mode de réalisation non limitatif, le matériau antibruit 11 comprend les mêmes dimensions que le trou 100. Ainsi, dans le premier exemple de réalisation non limitatif illustré sur la figure 5, les dimensions de la partie en saillie 110 du matériau antibruit 11 sont 15,23*5,21mm.

Dans un autre mode de réalisation non limitatif, le matériau antibruit 11 comprend des dimensions inférieures à celles du trou 100. Ainsi, dans le deuxième exemple de réalisation non limitatif de la figure 7, les dimensions de la partie en saillie 110 du matériau antibruit 11 sont 11*1.9mm.

On notera que la hauteur du matériau antibruit 11 dépend de la hauteur de la marche d'accostage 103, de l'épaisseur du boîtier client 21 et du jeu demandé par le client entre le matériau antibruit 11 et le boîtier client 21. Ainsi, dans des exemples non limitatifs, le jeu entre la partie en saillie 110 du matériau antibruit 11 peut être nul ou égal à environ 0,5mm.

Par ailleurs, le matériau antibruit 11 est en contact avec ladite vitre arrière 20. A cet effet, tel qu'illustré sur les figures 6 et 8, le matériau antibruit 11 recouvre ledit au moins un muret d'alimentation 102 pour former au moins un point de contact 1110 à l'extrémité 1020 dudit muret d'alimentation 102 avec la vitre arrière 20 du véhicule automobile 2. La partie du matériau antibruit 11 qui recouvre un muret d'alimentation 102 est référencée 111. Ainsi, le matériau antibruit 11 va prendre appui sur la vitre arrière 20 au niveau de ses points de contact 1110.

Le boîtier 10 vient ainsi en appui sur la vitre arrière 20 du véhicule automobile 2 au niveau dudit au moins un point de contact 1110. Cela évite au boîtier 10 d'être en contact direct avec la vitre arrière 20. On absorbe ainsi les chocs dus aux frottements entre le boîtier 10 et la vitre arrière 20. Les bruits dus à ces frottements sont ainsi supprimés. Dans un exemple non limitatif illustré sur les figures 6 et 8, il y a deux points de contact 1110.

Dans un mode de réalisation non limitatif, la partie en saillie 110 décrite précédemment est reliée à la partie 111.

Tel qu'illustré sur la figure 4b, en outre, le matériau antibruit 11 est en contact avec ledit système optique 12. En particulier, le matériau antibruit 11 comprend au moins une partie 115 en contact avec le système optique 12. Cela évite au boîtier 10 d'être en contact direct avec le système optique 12. On absorbe ainsi les chocs dus aux frottements entre le boîtier 10 et le système optique 12. Les bruits dus à ces frottements sont ainsi supprimés.

Tel qu'illustrée sur la figure 4b, la partie 115 est formée :
- d'une base 115a en contact avec l'élément optique primaire 120 et l'élément optique secondaire 121 du système optique 12. La base 115 s'appuie sur la partie primaire 10b du boîtier 10, en particulier sur la sous-partie 10b' ;
- d'un contrefort 115b en contact avec la carte électronique 14. Le contrefort 115b se trouve à environ 90° par rapport à la base 115a et s'appuie sur la partie primaire 10b du boîtier 10, en particulier sur la sous-partie 10b".

Dans l'exemple non limitatif illustré, le matériau antibruit 11 comprend deux parties 115.

Tel qu'illustré sur les figures 3, 4a, 4b, 6 et 8, le matériau antibruit 11 s'étend le long de la périphérie extérieure 10a' de la partie primaire 10a du boîtier 10. En particulier, il comprend une lèvre 114 qui s'étend le long de ladite périphérie extérieure 10a'. Ainsi, le boîtier 10 est configuré pour venir également en appui sur la vitre arrière 20 via le matériau antibruit 11, en particulier tout le long de sa lèvre 114. Le boîtier 10 n'est ainsi pas en contact direct avec la vitre arrière 20. On absorbe ainsi les chocs dus aux frottements entre le boîtier 10 et la vitre arrière 20. Les bruits dus à ces frottements sont ainsi supprimés. La lèvre 114 qui est souple, permet au boîtier 10 de venir s'appuyer correctement sur la vitre arrière 20 sans avoir de jeu avec la vitre arrière 20. Ainsi, il n'y a pas de retour du faisceau lumineux à l'intérieur et vers l'avant du véhicule automobile 2.

On notera que du fait de la réalisation par bi-injection, les différentes parties 110, 111 et 114 du matériau antibruit 11 sont reliées entre elles par différentes parties de liaison.

Ainsi, tel qu'illustré sur la figure 6, dans un mode de réalisation non limitatif, le matériau antibruit 11 comprend en outre deux parties de liaison 112 en contact avec les extrémités 10b‴ du boîtier 10. Ces deux parties 112 épousent la forme à angle droit des extrémités 10b‴. Ce sont des zones d'injection pour alimenter la lèvre 114 décrite plus loin et qui relient une partie de liaison longitudinale 113 et la lèvre 114.

Tel qu'illustré sur la figure 6, dans un mode de réalisation non limitatif, le matériau antibruit 11 comprend en outre une partie de liaison longitudinale 113 qui relie les deux parties 112 à au moins partie de liaison transversale 116. Cette partie de liaison longitudinale 113 s'étend le long du boîtier 10, en particulier le long de la marche d'accostage 103.

Tel qu'illustré sur la figure 6, dans un mode de réalisation non limitatif, le matériau antibruit 11 comprend en outre au moins une partie de liaison transversale 116 qui relie une partie 111 à la partie de liaison longitudinale 113.

Dans l'exemple non limitatif illustré, il comprend deux parties de liaison transversales 116 qui relient respectivement les deux parties 111 à ladite partie de liaison longitudinale 113. Ces parties de liaison transversales 116 comprennent des trous pour réduire le poids du matériau antibruit 11.

Bien entendu, la description de l'invention n'est pas limitée aux modes de réalisation décrits ci-dessus.

Ainsi, dans un autre mode de réalisation non limitatif, le système optique 12 comprend un ou plusieurs collimateurs.

Ainsi, dans un autre mode de réalisation non limitatif, le système optique 12 comprend une ou plusieurs lentilles.

Ainsi, dans un autre mode de réalisation non limitatif, le système optique 12 comprend un système de Fresnel et une ou plusieurs lentilles.

Ainsi, dans d'autres modes de réalisation non limitatifs, ledit au moins un trou 100 peut être de toute autre forme géométrique.

Ainsi, l'invention décrite présente notamment les avantages suivants :
- elle permet d'obtenir un positionnement du matériau antibruit 11 précis et répétable grâce au(x) trou(s) 100 ;
- elle permet de réduire les tolérances de positionnement du matériau antibruit 11. Ainsi, on passe à plus ou moins 0,2 mm contre plus ou moins 0,8 mm avec un morceau de mousse ;
- en supprimant le morceau de mousse de l'art antérieur, elle permet de :
   - supprimer les découpages et les manques de précision associés ;
   - supprimer un assemblage manuel ;
   - gagner en temps d'assemblage ;
   - supprimer un approvisionnement sur la ligne d'assemblage du dispositif lumineux 1 et les références associées à chaque morceau de mousse différent ;
   - supprimer la gestion de la diversité des morceaux de mousse ;
   - supprimer le retournement du dispositif lumineux 1 sur la ligne d'assemblage qui est nécessaire pour un collage d'un morceau de mousse ;
   - supprimer les contrôles de présence et de positionnement par une caméra du matériau antibruit 11 ;
   - supprimer le problème de visibilité par une caméra d'un morceau de mousse noire si le boîtier 10 est lui-même noir ;
   - réduire le coût du dispositif lumineux 1 ;
- elle permet d'obtenir une géométrie modulable du matériau antibruit 11, notamment de ses parties en saillie 110 grâce à une conception en amont d'un moule d'injection ;
- elle permet avec un seul matériau antibruit 1 qui est en contact avec la vitre arrière 20, le système optique 2 et le boîtier client 21, de supprimer les différents bruits dus aux frottements entre le boîtier 10 et ces trois éléments 20, 2 et 21.

## Revendications

1. Dispositif lumineux (1) d'un véhicule automobile (2), comprenant :
- un boîtier (10) configuré pour venir s'appuyer contre une vitre arrière (20) du véhicule automobile (2);
- un matériau antibruit (11), ledit boîtier (10) et ledit matériau antibruit (11) étant composés de deux matières différentes;
- ledit boîtier (10) comprenant au moins un trou (100) et ledit matériau antibruit (11) étant configuré pour traverser ledit au moins un trou (100) et s'étendre en saillie dudit au moins un trou (100) vers l'extérieur du boîtier; le dispositif lumineux étant **caractérisé en ce que**:
- le matériau antibruit (11) est disposé en partie à l'intérieur dudit boîtier (10) et est en contact avec ledit boîtier (10) et avec une vitre arrière (20) dudit véhicule automobile (2) ;

2. Dispositif lumineux (1) selon la revendication 1, dans lequel ledit dispositif lumineux (1) est un feu de stop surélevé.

3. Dispositif lumineux (1) selon l'une quelconque des revendications précédentes, dans lequel ledit boîtier (10) comprend une pluralité de trous (100).

4. Dispositif lumineux (1) selon l'une quelconque des revendications précédentes, dans lequel ledit matériau antibruit (11) comprend une dureté comprise entre 40 et 90 ShoreA.

5. Dispositif lumineux (1) selon l'une quelconque des revendications précédentes, dans lequel ledit dispositif lumineux (1) comprend en outre un système optique (12) et ledit matériau antibruit (11) est en contact avec ledit système optique (12).

6. Dispositif lumineux (1) selon l'une quelconque des revendications précédentes, dans lequel ledit boîtier (10) et ledit matériau antibruit (11) sont réalisés par bi-injection.

7. Dispositif lumineux (1) selon l'une quelconque des revendications précédentes, dans lequel ledit matériau antibruit (11) est un élastomère.

## Patentansprüche

1. Beleuchtungsvorrichtung (1) eines Kraftfahrzeugs (2), welche umfasst:
- ein Gehäuse (10), das dazu ausgebildet ist, an einer Heckscheibe (20) des Kraftfahrzeugs (2) zur Anlage zu kommen;
- ein schalldämmendes Material (11), wobei das Gehäuse (10) und das schalldämmende Material (11) aus zwei verschiedenen Stoffen bestehen;
- wobei das Gehäuse (10) mindestens ein Loch (100) umfasst und das schalldämmende Material (11) dazu ausgebildet ist, das mindestens eine Loch (100) zu durchqueren und sich aus dem mindestens einen Loch (100) zur Außenseite des Gehäuses hin vorstehend zu erstrecken; wobei die Beleuchtungsvorrichtung **dadurch gekennzeichnet ist, dass**:
- das schalldämmende Material (11) zu Teil im Inneren des Gehäuses (10) angeordnet ist und sich mit dem Gehäuse (10) und mit einer Heckscheibe (20) des Kraftfahrzeugs (2) in Kontakt befindet.

2. Beleuchtungsvorrichtung (1) nach Anspruch 1, wobei die Beleuchtungsvorrichtung (1) eine hochgesetzte Bremsleuchte ist.

3. Beleuchtungsvorrichtung (1) nach einem der vorhergehenden Ansprüche, wobei das Gehäuse (10) mehrere Löcher (100) umfasst.

4. Beleuchtungsvorrichtung (1) nach einem der vorhergehenden Ansprüche, wobei das schalldämmende Material (11) eine Härte zwischen 40 und 90 ShoreA aufweist.

5. Beleuchtungsvorrichtung (1) nach einem der vorhergehenden Ansprüche, wobei die Beleuchtungsvorrichtung (1) außerdem ein optisches System (12) umfasst und das schalldämmende Material (11) sich mit dem optischen System (12) in Kontakt befindet.

6. Beleuchtungsvorrichtung (1) nach einem der vorhergehenden Ansprüche, wobei das Gehäuse (10) und das schalldämmende Material (11) durch Bi-Injektion hergestellt sind.

7. Beleuchtungsvorrichtung (1) nach einem der vorhergehenden Ansprüche, wobei das schalldämmende Material (11) ein Elastomer ist.

## Claims

1. Lighting device (1) for a motor vehicle (2), comprising:
- a housing (10) configured to bear against a rear window (20) of the motor vehicle (2);
- an antinoise material (11), said housing (10) and said antinoise material (11) being composed of two different materials;
- said housing (10) comprising at least one hole (100), and said antinoise material (11) being configured to pass through said at least one hole (100) and to extend in a projecting manner from said at least one hole (100) to the outside of the housing;
the lighting device being **characterized in that**:
- the antinoise material (11) is partly arranged inside said housing (10) and is in contact with said housing (10) and with a rear window (20) of said motor vehicle (2).

2. Lighting device (1) according to Claim 1, in which said lighting device (1) is a high mount stop light.

3. Lighting device (1) according to either one of the preceding claims, in which said housing (10) comprises a plurality of holes (100).

4. Lighting device (1) according to any one of the preceding claims, in which said antinoise material (11) has a Shore A hardness of between 40 and 90.

5. Lighting device (1) according to any one of the preceding claims, in which said lighting device (1) additionally comprises an optical system (12), and said antinoise material (11) is in contact with said optical system (12).

6. Lighting device (1) according to any one of the preceding claims, in which said housing (10) and said antinoise material (11) are produced by two-shot injection moulding.

7. Lighting device (1) according to any one of the preceding claims, in which said antinoise material (11) is an elastomer.
